# EUROPÄISCHE PATENTSCHRIFT

(11) **EP 1 894 705 B1**
(45) Veröffentlichungstag und Bekanntmachung des Hinweises auf die Patenterteilung: **25.08.2010**
(21) Anmeldenummer: 07024525.3
(22) Anmeldetag: 09.05.2005
(51) Int. Cl.: B29C 67/00

(54) **Verfahren und Vorrichtung zur Herstellung eines dreidimensionalen Objekts mit Auflösungsverbesserung mittels Pixel-Shift**
Method and device for creating a three dimensional object with resolution enhancement by means of pixel shift
Procédé et dispositif de production d'un objet en trois dimensions a résolution améliorée par décalage de pixels

(30) Priorität: 10.05.2004 DE 102004022961; 10.05.2004 US 569893 P
(43) Veröffentlichungstag der Anmeldung: 05.03.2008
(62) Teilanmeldung aus: 05739579.0
(73) Patentinhaber: Envisiontec GmbH, 45968 Gladbeck (DE)
(72) Erfinder: Shkolnik, Alexander, Los Angeles CA 90046 (US); John, Hendrik, 46569 Hünxe (DE); El-Siblani, Ali, Dearborn Heights Michigan 48127 (US)
(74) Vertreter: Oser, Andreas

(56) Entgegenhaltungen:
- EP-A- 0 958 912
- WO-A-02/27408
- DE-A1- 19 929 199
- DE-A1- 19 939 617
- FR-A- 2 692 053
- US-A- 5 303 141
- US-A- 6 029 096
- US-B1- 6 200 646
- US-B1- 6 413 360

## Beschreibung

### Anwendungsgebiet

Die Erfindung betrifft ein Verfahren und eine Vorrichtung zur Herstellung eines dreidimensionalen Objekts durch schichtweises Verfestigen eines photohärtenden Materials durch Maskenbelichtung mittels einer gerasterten bildgebenden Einheit mit konstanter Auflösung, wobei die Auflösung in der Bild-/Bauebene im Subpixelbereich verbessert werden soll.

### Stand der Technik

Für den schichtweisen Aufbau dreidimensionaler Objekte aus "lichthärtenden" Materialien werden in der Literatur unterschiedlichste Verfahren angegeben, siehe hierzu "Automated Fabrication - Improving Productivity in Manufacturing" von Marshall Burns, 1993 (ISBN 0-13-119462-3).

Diese Efindung betrifft Verfahren, bei denen die zu erzeugende Schicht durch die Belichtung mittels einer gerasterten Maske beruht, wobei die kleinste physikalische Auflösung in der Maske durch die Größe eines Pixels gegeben ist.

Derzeit bekannte Möglichkeiten sind u.a. die Belichtung durch
a) Projektionseinheit (auf Basis DLP®IDMD®, LCD, ILA®, etc.)
b) LC-Display (reflexiv, transmissiv)
c) LED-, bzw. Laser-Dioden-Zeile/-Matrix (die in XY über die Schicht bewegt wird)
d) auf MEM's-Technologie (light-valve) basierende Zeile ode Matrix (die in XY über die Schicht bewegt wird)

Einige dieser Methoden werden in folgenden Patenten beschrieben:
IPC: B29C67/00 "Rapid Prototyping apparatus and method of Rapid Prototyping" von Dicon AS (DK), (Anmeldung)

US-Patent US005247180A "Stereolithographic Apparatus and Method of use" von Texas Instruments Inc., Sept. 1993.

US-Patent US005980813A "Rapid Prototyping using multiple materials" von SRI International, Nov. 1999;

Gebrauchsmusterschrift DE G 93 19 405.6 "Vorrichtung zur Herstellung eines dreidimensionalen Objekts (Modells) nach dem Prinzip der Photoverfestigung" vom Forschungszentrum Informatik an der Universität Karlsruhe, Dez. 1993;

eine Anwendung für die Erzeugung mikrotechnischer, dreidimensionaler Bauteile nach einem ähnlichen Verfahren wird in der Gebrauchsmusterschrift DE 299 11 122 U1 "Vorrichtung zum Herstellen eines dreidimensionalen Objektes", DeltaMed u.a., Juni 1999, beschrieben.

PCT-Patentanmeldung 02 008 019.8 "Vorrichtung zum Herstellen eines dreidimensionalen Objektes" der Envision Technologies GmbH, April 2002.

In der US 6,180,050 wird eine lineare Scan-Technik zur schichtweisen Verfestigung bei der Herstellung dreidimensionaler Bauteile beschrieben. Die Auflösung wird erhöht, indem ein Belichtungskopf mit einem Array von optischen Fasern, die in Y-Richtung gegeneinander versetzt sind, linear in X-Richtung gescannt werden.

Druckschrift DE 199 29 199 A1 offenbart ein Verfahren gemäß dem Oberbegriff des Anspruchs 1 und eine Vorrichtung gemäß dem Oberbegriff des Anspruchs 4. Sie beschreibt den Einsatz eines LCD-Projectors mit einer Matrix von 800×600 Pixeln und 256 Graustufen, mit denen die Intensität der Belichtung variiert, wird. Die Steuerung der Intensität individuell für die jeweiligen Pixel wird angewandt, um die Belichtungsdosis in solchen Bereichen der Bildebene, die sich oberhalb von noch nicht verfestigtem Material befinden, relativ zu denjenigen Bereichen zu erhöhen, die sich oberhalb bereits verfestigten Materials befinden.

Druckschrift WO 02/27408 A2 wendet auch eine Graustufenvariation an, allerdings anhand eines DMD (digital mirror devices).

Druckschrift DE 199 30 617 A1 wendet ebenfalls eine Graustufenvariation an. Hier kommt allerdings ein Satz von DKDP Polarisationskristallen zum Einsatz.

Druckschrift US 6.200.646 B1 beschreibt eine Vorrichtung_unter Einsatz einer DLP (digital light processing) - Technik. Eine Graustufenvariation zur Beinflussung bestimmter physikalischer Parameter wird vorgeschlagen.

### Nachteile Stand der Technik

Bei allen den oben beschriebenen Verfahren steht die Auflösung der zu härtenden Materialschicht in direkter Abhängigkeit mit der Auflösung des bildgebenden Verfahrens.

Bei den Projektionsverfahren bestimmt zusätzlich eine zwischengeschaltete Optik den Maßstab der projezierten, bzw. auszuhärtenden Schicht.

Die Auflösung pro Flächeneinheit in der Bild-/Bauebene ist somit abhängig a) von der Auflösung der bildgebenden Einheit bzw. dem kleinsten Element, genannt Pixel und deren relative Abstände zueinander, genannt Pixel-Pitch und b) dem Projektionsmaßstab.

Die Oberflächen-Rauhigkeit des Bauteils ist somit bestimmt durch die kleinste Volumeneinheit eines Voxels (Volumen-Pixels), dessen Größe sich zusammensetzt aus der der projizierten Pixelfläche in XY und der Schichtdicke in Z.

Die Auflösung der Schichtdicke ist vorgegeben durch die kleinste Auflösung (Schrittgröße) des Aktuators in Z um die Trägerplattform zu bewegen. Hier können bereits Auflösungen bis in den enstelligen µm-Bereich erreicht werden.

Soll eine niedrigere Oberflächen-Rauhigkeit des Bauteils erreicht werden, muss das Projektionsfeld und damit einhergehend die Pixelfläche verkleinert werden.

Als Beispiel sei hier die Projektion m.H. eines Multimedia-Projektors angegeben; bei einer Auflösung von XGA (1024 x 768 Bildpunkten), einem Pixel von 17µm und einem Pixel-Pitch von 17,9µm erreicht man bei einer Projektion auf 275mm x 206mm mit einem Vergrößerungsfaktor der Projektionsoptik von 15 eine Auflösung in der Bild-/Bauebene und somit der auszuhärtenden Schicht von annähernd 100dpi, was einer Pixelgröße in der Projektionsebene von rund 0,254 mm x 0,254 mm entspricht.

Um die Auflösung in der Bild-/Bauebene bei gleichbleibender Baufläche z.B. zu verdoppeln, wird bei den Projektionsverfahren vorgeschlagen, den Projektions-/Vergrößerungsfaktor zu halbieren (was eine Viertelung der Fläche bedeutet) und entweder die gesamte Projektionseinheit oder den Bauraum paralle zueinander zwecks Belichtung der vier Teilebenen zu verschieben.

Dieses Verfahren hat den erheblichen Nachteil, dass relativ große Massen sehr präzise zueinander bewegt werden müssen, um eine exaktes Aneinanderstoßen und eine innige Verbindung der Teilebenen zu gewährleisten, was für die dazu notwendige Mechanik einen erheblichen Kostenaufwand und zusätzlichen Platzbedarf in der gesamten Anordnung bedeutet.

Bei der selektiven direkten Belichtung durch das Abscannen m.H. einer LED-, bzw. Laser-Dioden-Zeile/-Matrix oder die direkte Belichtung durch eine Maske, die durch einen transmissiven LCD ausgebildet ist, ist die Auflösung in der Bauebene gleich der Auflösung in der bildgebenden Einheit.

### Aufgabe der Erfindung

Aufgabe der Erfindung ist es, ein Verfahren bzw. eine Vorrichtung bereitzustellen, die es ermöglicht, die Auflösung in der Bauebene bei gleich bleibend großer Baufläche um ein Vielfaches im Subpixelbereich zu erhöhen, d.h. die Rasterung der Außen- und Innenkonturen in den Schnittebenen des Objektes zu verfeinern,
a) ohne eine Belichtung in aneinandergesetzten Teilflächen vornehmen zu müssen und
b) ohne die Auflösung der gerasterten, bildgebenden Einheit selbst zu erhöhen.

### Lösung der Aufgabe

Diese Aufgabe wird durch ein Verfahren mit den Merkmalen nach Anspruch 1 bzw. durch eine Vorrichtung mit den Merkmalen nach Anspruch 21 gelöst. Bevorzugte Weiterbildungen des erfindungsgemäßen Verfahrens bzw. der erfindungsgemäßen Vorrichtung sind in den Unteransprüchen angegeben.

### Beschreibung der Erfindung und deren Vorteile

Durch das erfindungsgemäße Verfahren bzw. die erfindungsgemäße Vorrichtung wird die Auflösung in der Bild-/Bauebene im Subpixelbereich mittels "Pixel-Shift" verbessert. Insbesondere handelt es sich bei der Erfindung um ein schichtweises Verfestigen zur Herstellung dreidimensionaler Bauteile bzw. Körper durch Materialverfestigung (speziell durch Photopolymerisation) mittels Maskenprojektion, und nicht um eine herkömmliche schichtweise Verfestigung mittels (linearer) Scantechnik. Dies kann erfindungsgemäß sehr effektiv und vorteilhaft durch die Anwendung eines zweidimensional festgelegten Arrays als bildgebendem Element ausgeführt werden, bei dem Rasterung und/oder Auflösung fest vorgegeben ist/sind, z.B. durch ein fixes Mikrospiegel-Array.
Im Vergleich zur Scan-Technik, bei Canon als VAROS (Variable Refraction Optical System) und bei Epson als "Double-CCD" bezeichnet, wird das Prinzip, dem Einlesen und Überlagern von im Subpixel-Bereich zueinander versetzter Bilder, in dieser Efindung für gerasterte bildgebende Verfahren im Rapid Prototyping eingesetzt.
Die Auflösung bzw. die Anzahl der Bildpunkte der gerasterten, bildgebenden Einheit selbst muß nicht erhöht werden, um eine Verbesserung der Auflösung in der Bauebene zu erreichen.
Zur Erhöhung der Auflösung erfolgt die Belichtung nicht in nebeneinander angeordneten entsprechend verkleinerten Teilflächen, wodurch sich die Bau-/Belichtungszeit der Gesamtfläche um die Anzahl der Teilflächen erhöhen würde, sondern die Projektion/Belichtung erfolgt über die gesamte Baufläche.

Dadurch dass eine Überlagerung der im Subpixel-Bereich zueinander versetzten Bilder stattfindet erhöht sich die Bau-/Belichtungszeit der Gesamtfläche nur unwesentlich.
Der Grad der Auflösungsverbesserung in der Bauebene ist frei wählbar.

### Beschreibung der Zeichnungen und der bevorzugten Ausführungsformen der Erfindung

Die vorliegende Erfindung wird nachfolgend beispielhaft und nicht einschränkend anhand von Zeichnungen näher erläutert.

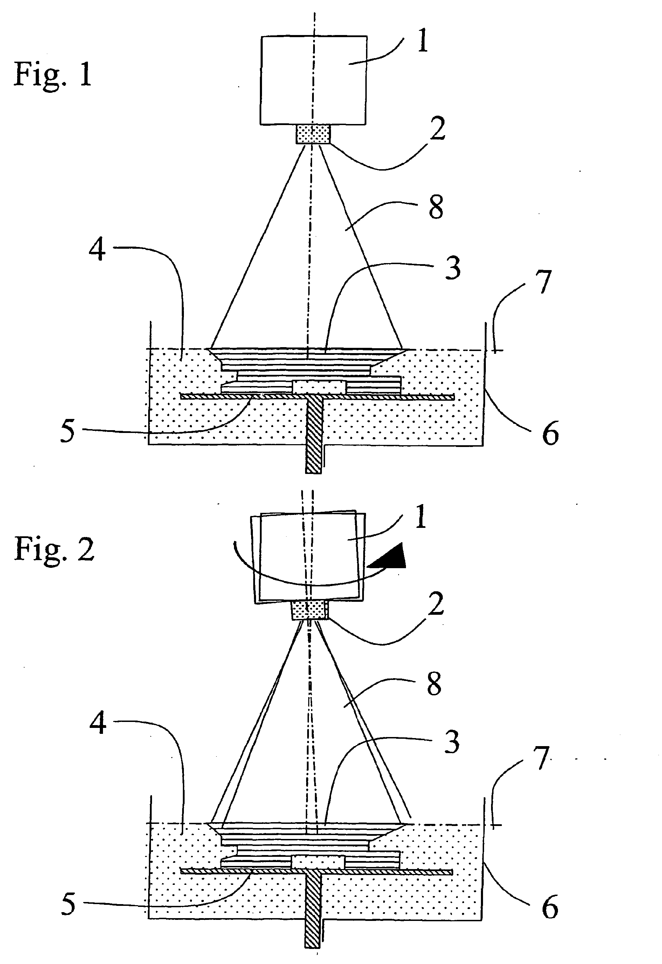

Fig. 1 zeigt schematisch eine grundsätzliche Vorrichtung zur Generierung eines dreidimensionalen Objekts 3 durch schichtweise Aushärtung eines photohärtenden Materials 4 mittels Maskenprojektion 8, wobei sich die Projektionseinheit 1 mit einer abbildenden Optik 2 oberhalb des Beckens 6, gefüllt mit photohärtendem Material 4, befindet und das Objekt 3 schichtweise auf einer Trägerplatte 5 aushärtet, die innerhalb des Beckens 6 in vertikaler Richtung bewegt werden kann.
Bei einem auf Photohärtung basierenden Verfahren mittels Maskenbelichtung wird die zum Härten notwendige Strahlung in die Bild-/Bauebene 7 projiziert. Die Belichtung wird mit Hilfe einer gerasterten bildgebenden Einheit ausgeführt, die als Matrix ausgebildet ist. Das Bild setzt sich dabei aus einzelnenen Bildpunkten (Pixeln) zusammen und bildet so eine gerasterte Maske (Bitmap), wobei die Pixel in der Ebene räumlich zueinander fest angeordnet sind.

Fig. 8 - 12 zeigen an einem einfachen Beispiel das Prinzip der Maskengenerierung (Bitmapping) einer Querschnittsfläche eines dreidimensionalen Objektes in der Ausgangspostion (Fig. 8) und in unterschiedlichen, im Subpixelbereich versetzten (geshifteten) Zuständen der Bitmap (Fig. 9 - 11), sowie die Überlagerung sämtlicher Bitmaps (Fig. 12).

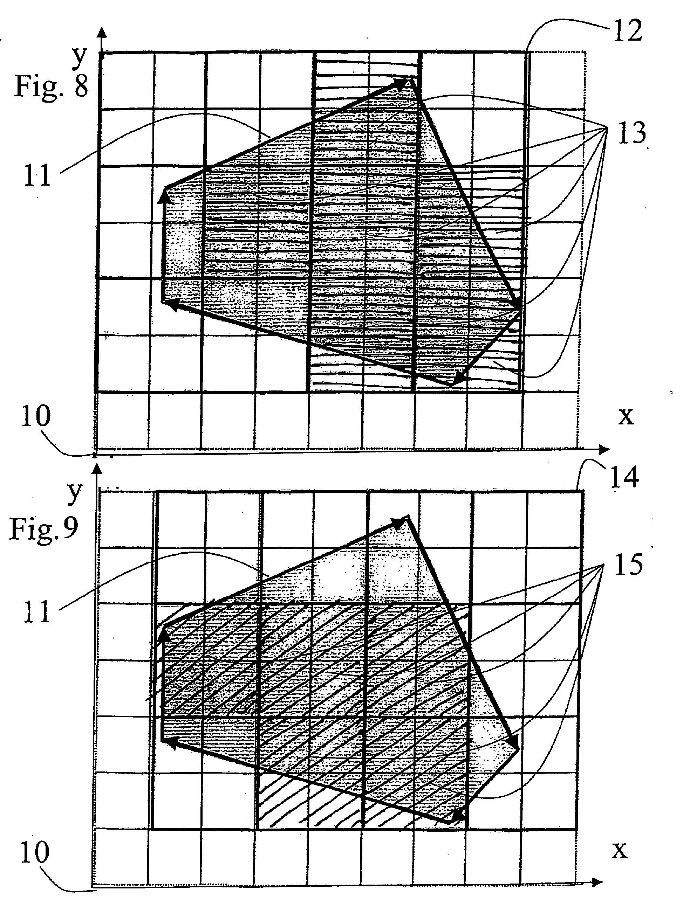

Die Querschnittsfläche, d.h. Außen- und Innenkonturen, wird durch einen Vektorzug 11 beschrieben, der von einer gerasterten Fläche (Bitmap) 12 überlagert wird, deren Auflösung exakt der Auflösung der diskreten Elemente (Pixel) im projizierten Bild 8 entspricht, welches durch die bildgebende Matrix erzeugt wird. Vektorzug 11 und Bitmap 12 befinden sich dabei in einem übergeordneten XY-Koordinatensystem 10. Fig. 8 zeigt die Bitmap in ihrer Ausgangsposition. Durch einen speziellen Algorithmus werden die aktiven Pixel 13 berechnet, die in der Bitmap 12 in der Ausgangsposition die Querschnittsfläche beschreiben.
In Fig. 9 wurde die Bitmap 14 relativ zur Querschnittsfläche um Delta X im Subpixelbereich versetzt, wodurch sich eine neue Verteilung der aktiven Pixel 15 ergibt.

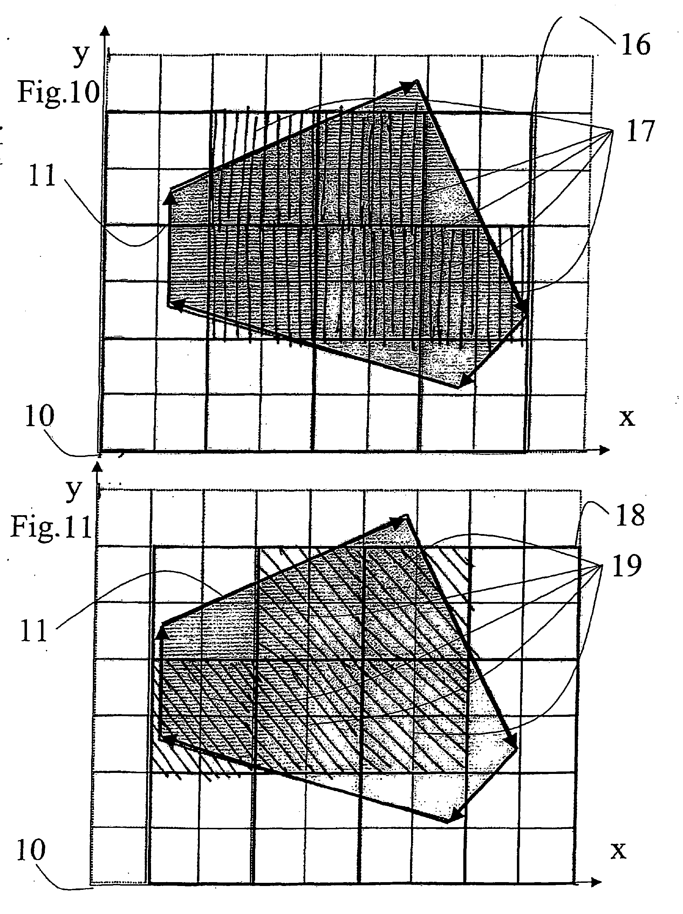

Fig. 10 zeigt einen Versatz der Bitmap 16 relativ zur Querschnittsfläche um Delta Y mit den aktiven Pixeln 17.
Fig. 11 zeigt einen Diagonal-Versatz der Bitmap 18 relativ zur Querschnittsfläche Delta X und Delta Y mit den aktiven Pixeln 19.

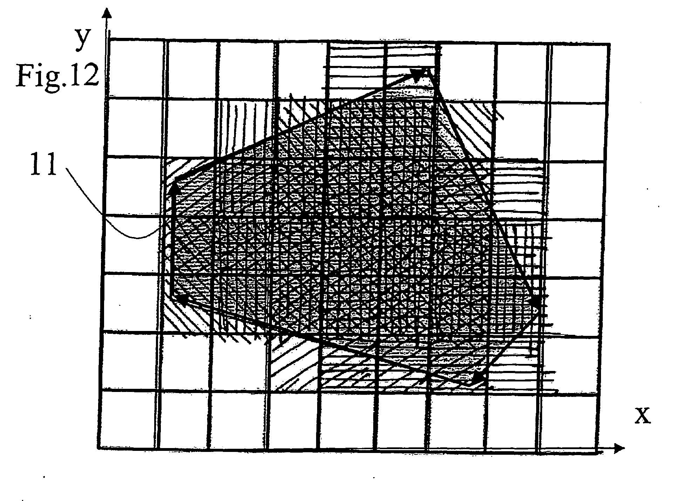

In Fig. 12 sind alle Bitmaps 12, 14, 16 und 18 mit ihren aktiven Pixeln 13, 15, 17 und 19 überlagert dargestellt, wobei eindeutig eine Auflösungsverbesserung im (Aussen-)Konturbereich der Querschnittsfläche zu erkennen ist.
Ein vereinfachtes Verfahren zur Auflösungsverbesserung wird dadurch erreicht, indem nur die Bitmap 12 der Ausgangsposition (Fig. 8) und die Bitmap 18 des Diagonal-Versatzes (Fig. 11) überlagert werden. In diesem Fall muss die Bitmap, bzw. das Bild nur in eine Richtung entlang der Pixel-Diagonalen geshiftet werden.
Je nach gewünschter Auflösungsverbesserung kann für jede Objektschicht ein Mehr- bzw. Vielfaches (mindestens zweifach) an Masken bzw. Bitmaps mit unterschiedlichem Subpixelversatz generiert und überlagert werden.

Durch eine unterschiedlich versetzte und überlagerte Belichtung jeder Objekt-/Materialschicht (hier mittels der Bitmaps 12, 14, 16, 18) wird eine Auflösungsverbesserung in XY im Bereich der Außen- und Innenkonturen erzielt. Um die jeweilige Subpixel-Verschiebung des Bildes in der Bauebene zu erreichen, werden im folgenden unterschiedliche Ausführungsformen beschrieben:
1) In Fig. 2 wird die bildgebende Einheit 1 je versetzter Bitmap so gekippt, dass die gewünschte Verschiebung des Bildes im Subpixelbereich in der Bild-/Bauebene erreicht wird.

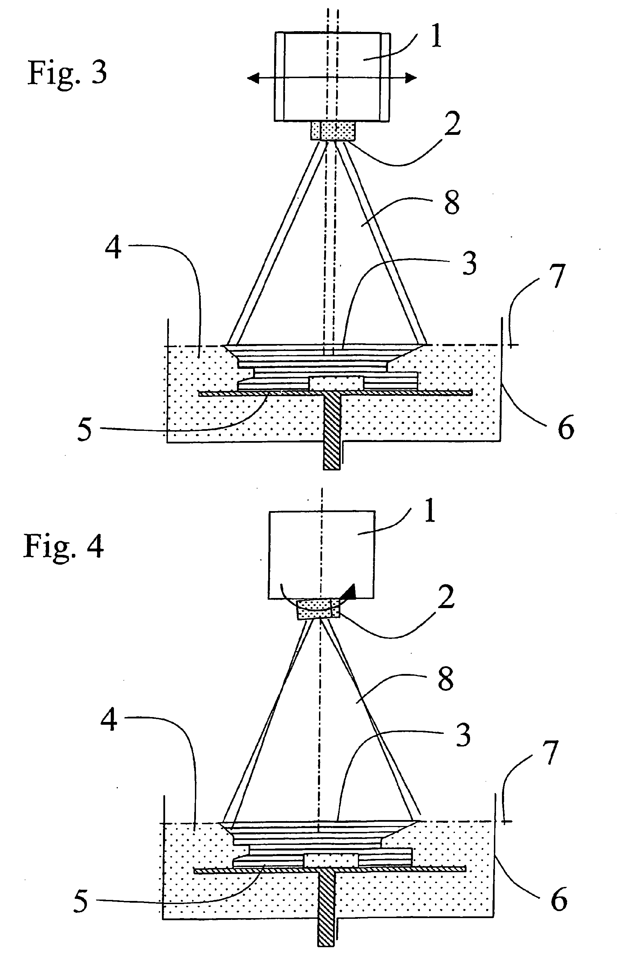

2) In Fig. 3 wird die bildgebende Einheit 1 je versetzter Bitmap um den entsprechenden Subpixelbereich in X und Y, also planparallel zur Bild-/Bauebene durch Aktuatoren versetzt.
3) In Fig. 4 bleibt die bildgebende Projektionseinheit in ihrer Position fest. Die abbildende Optik 2 wird je versetzter Bitmap so gekippt, dass die gewünschte Verschiebung des Bildes in der Bild-/Bauebene im Subpixelbereich erreicht wird.

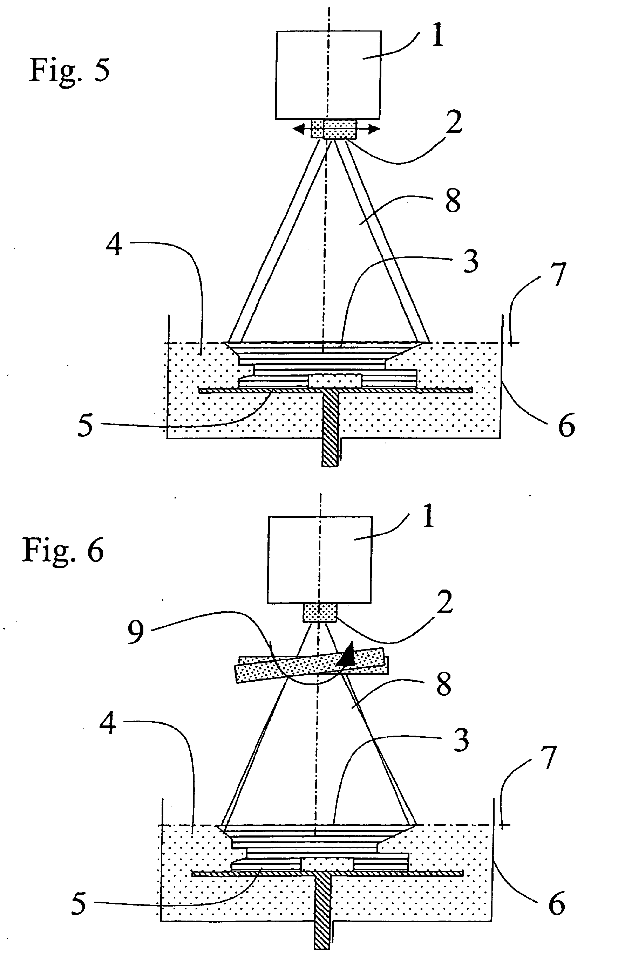

4) In Fig. 5 bleibt die bildgebende Projektionseinheit in ihrer Position fest. Die abbildende Optik 2 wird je versetzter Bitmap in XY so verschoben, dass die gewünschte Verschiebung des Bildes in der Bild-/Bauebene im Subpixelbereich erreicht wird.
5) Sonderfall für Abbildungen mit bildseitig telezentrischen Strahlengang, bildseitig annähernd telezentrischen Strahlengang und Teleobjektiven mit langer Brennweite, um die optischen Fehler (Winkelfehler, Verzeichnung) klein zu halten:
   a) In Fig. 5 wird die Projektionseinheit 1 je versetzter Bitmap über Aktuatoren so verkippt, dass das Projektionsbild 8 in der Bild-/Bauebene 7 im entsprechenden Subpixelbereich in X und Y versetzt wird.
   b) In Fig. 6 ist zwischen Projektionseinheit 1 und Bild-/Bauebene 7 eine kardanisch aufgehängte transparente planparallele Platte 9 (Glasplatte) angeordnet, die durch Rotation um zwei Achsen (XY), die sich planparallel zur Bild-/Bauebene befinden, den Projektionsstrahlengang 8 und somit das Bild in der Bild-/Bauebene 7 im Subpixelbereich in X und Y versetzt.

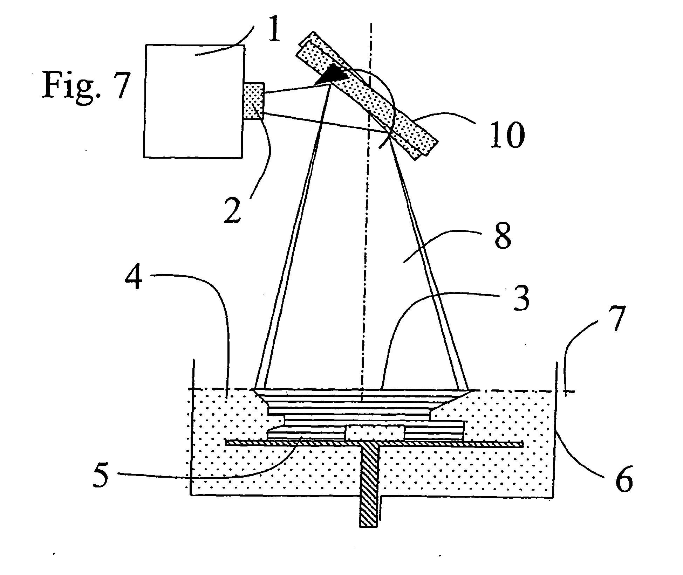

   c) In Fig. 7 bleibt die Projektionseinheit 1 in ihrer Position fest. Der Projektionsstrahl 8 wird über einen Spiegel 10 in die Bild-/Bauebene 7 umgelenkt. Der Umlenkspiegel 10 verfügt über eine Verstellmöglichkeit (kardanische Lagerung), durch die der Projektionsstrahl je versetzter Bitmap so abgelenkt werden kann, dass in der Bild-/Bauebene 7 eine Verschiebung des Bildes im Subpixelbereich erreicht wird.

Die oben beschriebenen Ausführungsformen 1) bis 5) bzw. a) bis c) können einzeln verwirklicht oder miteinander kombiniert werden.

Die für die Maskenprojektion notwendigen Bitmaps jeder einzelnen Schicht werden aus Schichtdaten erzeugt, in denen die Außen- und Innenkonturen des jeweiligen Objektquerschnitts in Vektorzügen dargestellt sind (wie z.B. im Datenformat CLI definiert).

Hierzu wird eine spezielle SW verwendet, welche die Umrechnung der Vektorgrafiken in das Bitmap-Format (Bitmapping) ausführt.

Für jeden Subpixelversatz in XY wird eine separate Bitmap erzeugt, indem die XY-Koordinaten der Vektoren (für Außen- und Innenkonturen) der Schichtdaten mit dem jeweiligen Versatz-Offset in XY (im Subpixelbereich) transformiert und über das Bitmap-Raster gelegt werden und so eine neue Verteilung der aktiven Pixel je Versatz errechnet wird.

Die projezierte Lichtleistung pro Pixel kann durch "Graustufen" innerhalb einer Projektionsmaske variiert werden, um so den Aushärtegrad selektiv in einer Schicht zu beeinflussen. Dies ist insbesondere sinnvoll, um Lichtleistung der Kontur-Pixel anzuheben, da sich hier aufgrund des Subpixelversatzes der einzelnen Bitmaps nur Teilüberlagerungen der jeweiligen Kontur-.

Pixel ergeben (in den Flächen innerhalb der Konturen ist eine vollständige Überlappung der Pixel der einzelnen Bitmaps gewährleistet).

Bei der Projektion / Überlagerung der um Subpixel versetzten Schichtbilder kann durch Überlagern von Graustufen insbesondere entlang der Konturen der projezierten Flächenstruktur eine nahezu homogene Verteilung der Lichtleistung bzw. der Belichtungsintensität über die Summe der Graustufenmasken erzielt werden.

## Patentansprüche

1. Verfahren zur Generierung einer Bitmap bezüglich einer Querschnittsfläche eines durch Verfestigen eines unter Einwirkung von elektromagnetischer Strahlung verfestigbaren Materials (4) mittels Maskenbelichtung (8) über eine bildgebende Einheit (1) herzustellenden dreidimensionalen Objektes (3),
wobei eine gerasterte Fläche oder Bitmap (12, 14, 16, 18) erzeugt wird, deren Auflösung exakt der Auflösung der diskreten Elemente oder Pixel (13, 15, 17, 19) in der bildgebenden Einheit entspricht,
wobei die erzeugte gerasterte Fläche oder Bitmap (12, 14, 16, 18) die projizierte Leistung der elektromagnetischen Strahlung pro Pixel (13, 15, 17, 19) durch Graustufen innerhalb einer Projektionsmaske variiert, **dadurch gekennzeichnet, dass**
bei einer Projektion oder Überlagerung von um Subpixel versetzten Schichtbildem durch Überlagern von Graustufen, insbesondere entlang der Konturen der projizierten Flächenstruktur, eine nahezu homogene Verteilung der Leistung der elektromagnetischen Strahlung oder der Belichtungsintensität über die Summe der Graustufenmasken erzielt wird.

2. Verfahren nach Anspruch 1, wobei die erzeugte gerasterte Fläche oder Bitmap (12, 14, 16, 18) die projizierte Leistung durch Graustufen innerhalb einer Projektionsmaske so variiert, dass der Aushärtegrad in einer Schicht selektiv beeinflußt wird.

3. Verfahren nach einem der Ansprüche 1 oder 2, wobei die erzeugte gerasterte Fläche oder Bitmap (12, 14, 16, 18) die projizierte Leistung durch Graustufen innerhalb einer Projektionsmaske so variiert, dass die Leistung der elektromagnetischen Strahlung von Kontur-Pixeln relativ zur Leistung der elektromagnetischen Strahlung von Flächen-Pixeln angehoben ist.

4. Vorrichtung zur Herstellung eines dreidimensionalen Objektes (3) durch Verfestigen eines unter Einwirkung von elektromagnetischer Strahlung verfestigbaren Materials (4) mittels Maskenbelichtung (8), wobei die zum Härten notwendige Strahlung in eine Bild- oder Bauebene (7) abgebildet wird,
wobei die Vorrichtung eine gerasterte bildgebende Einheit (1) zur selektiven Belichtung, die entweder als Zeile oder Matrix ausgebildet ist, aufweist,
wobei die bildgebende Einheit (1) das Bild aus einzelnen Bildpunkten oder Pixeln (13, 15, 17, 19) zusammensetzt und so eine gerasterte Maske oder Bitmap (12, 14, 16, 18) bildet,
wobei die Pixel (13, 15, 17, 19) in der Ebene räumlich zueinander fest angeordnet sind,
wobei die Vorrichtung darauf angepaßt ist, eine gerasterte Fläche oder Bitmap (12, 14, 16, 18) zu erzeugen, deren Auflösung exakt der Auflösung der diskreten Elemente oder Pixel in der bildgebenden Einheit (1) entspricht,
wobei die erzeugte gerasterte Fläche oder Bitmap (12, 14, 16, 18) die projizierte Leistung der elektromagnetischen Strahlung pro Pixel (13, 15, 17, 19) durch Graustufen innerhalb einer Projektionsmaske variiert, **dadurch gekennzeichnet, dass**
die Vorrichtung darauf angepaßt ist, bei einer Projektion oder Überlagerung von um Subpixel versetzten Schichtbildern durch Überlagern von Graustufen, insbesondere entlang der Konturen der projizierten Flächenstruktur, eine nahezu homogene Verteilung der Leistung der elektromagnetischen Strahlung oder der Belichtungsintensität über die Summe der Graustufenmasken zu erzielen.

5. Vorrichtung nach Anspruch 4, die darauf angepaßt ist, durch die erzeugte gerasterte Fläche oder Bitmap (12, 14, 16, 18) die projizierte Leistung durch Graustufen innerhalb einer Projektionsmaske so zu variieren, dass der Aushärtegrad in einer Schicht selektiv beeinflußbar ist.

6. Vorrichtung nach einem der Ansprüche 4 oder 5, die darauf angepaßt ist, durch die erzeugte gerasterte Fläche oder Bitmap (12, 14, 16, 18) die projizierte Leistung durch Graustufen innerhalb einer Projektionsmaske so zu variieren, dass die Leistung der elektromagnetischen Strahlung von Kontur-Pixeln relativ zur Leistung der elektromagnetischen Strahlung von Flächen-Pixeln angehoben ist.

## Claims

1. Method of generating a bitmap with respect to a sectional area of a three-dimensional object (3) to be produced by solidifying a material (4) solidifiable by the action of electromagnetic irradiation by means of mask illumination (8) via an image forming unit (1),
wherein a rasterized area or bitmap (12, 14, 16, 18) is generated whose resolution directly corresponds with the resolution of the discrete elements or pixels (13, 15, 17, 19) in the image forming unit,
wherein the generated rasterized area or bitmap (12, 14, 16, 18) varies the projected power of the electromagnetic irradiation per pixel (13, 15, 17, 19) within the projection mask by grey scales,
**characterized in that**
upon a projection or superposition of layer images mutually shifted by sub-pixels, a substantially homogeneous distribution of the power of the electromagnetic irradiation or the exposure intensity is achieved by means of superposition of greyscales, particularly along the contours of the projected area structure, over the sum of greyscale masks.

2. The method of claim 1, wherein the generated, rasterized area or bitmap (12, 14, 16, 18) varies the projected power in terms of grey scales within a projection mask, so that the degree of solidification in a layer is selectively influenced.

3. The method of claim 1 or 2, wherein the generated, rasterized area or bitmap (12, 14, 16, 18) varies the projected power in terms of grey scales within a projection mask, so that a power of the electromagnetic radiation of pixels of the contours is raised relative to a power of electromagnetic radiation of pixels inside the projected area.

4. A device for the production of a three-dimensional object (3) by solidification of a material object to be produced by solidifying a material (4) solidifiable by the action of electromagnetic irradiation by means of mask illumination (8),
wherein the irradiation required for curing is imaged into a build- or construction plane (7),
wherein the device includes a rasterized image forming unit (1) for selective exposure, which is embodied either by line or matrix,
wherein the image forming unit (1) composes the image from individual image dots or pixels (13, 15, 17, 19) and thereby forming a rastered mask or bitmap (12, 14, 16, 18),
wherein the pixels (13, 15, 17, 19) are arranged within the plane in a manner mutually fixed to each other,
wherein the device is adapted to generate a rastered area or bitmap(12, 14, 16, 18), whose resolution directly corresponds with the resolution of the discrete elements or pixels in the image forming unit,
wherein the generated rasterized area or bitmap (12, 14, 16, 18) varies the projected power of the electromagnetic irradiation per pixel (13, 15, 17, 19) with the projection mask by grey scales,
**characterized in that**
the device is adapted to achieve a substantially homogeneous distribution of the power of the electromagnetic irradiation or the exposure intensity upon projection or superposition of layer images mutually shifted by sub-pixels by means of superposition of greyscales, particularly along the contours of the projected area structure, over the sum of greyscale masks.

5. The device according to claim 4, which is adapted such that the generated, rasterized area or bitmap (12, 14, 16, 18) varies the projected power in terms of grey scales within a projection mask, so that the degree of solidification in a layer is selectively influenced.

6. The device according to claims 4 or 5, which is adapted such that the generated, rasterized area or bitmap (12, 14, 16, 18) varies the projected power in terms of grey scales within a projection mask, so that a power of the electromagnetic radiation of pixels of the contours is raised relative to a power of electromagnetic radiation of pixels inside the projected area.

## Revendications

1. Procédé génération d'une matrice de points relative à une surface de section transversale objet (3) en trois dimensions, à fabriquer par solidification, au moyen d'un éclairage à masque (8) par l'intermédiaire d'une unité (1) de production d'image, d'un matériau (4) durcissable sous l'effet de rayonnement électromagnétique,
une surface tramée ou matrice de points (12, 14, 16, 18) étant générée, dont la résolution correspond exactement à la résolution des éléments discrets ou pixels (13, 15, 17, 19) dans l'unité de production d'image,
la surface tramée ou matrice de points (12, 14, 16, 18) faisant varier, par niveaux de gris à l'intérieur d'un masque de projection, la puissance projetée du rayonnement électromagnétique par pixel (13, 15, 17, 19), **caractérisé en ce que,**
dans le cas d'une projection ou superposition d'images à couches, décalées de la valeur de pixels, par superposition de nivaux de gris, en particulier le long des contours de la structure de surface projetée, une distribution à peu près homogène de la puissance du rayonnement électromagnétique ou de l'intensité d'éclairage est obtenue par le biais de la somme des masques à nivaux de gris.

2. Procédé selon la revendication 1, **caractérisé en ce que** la surface tramée ou matrice de points (12, 14, 16, 18) générée fait varier la puissance projetée par niveaux de gris à l'intérieur d'un masque de projection, de manière que le degré de durcissement dans une couche soit influencé de manière sélective.

3. Procédé selon l'une des revendications 1 ou 2, **caractérisé en ce que** la surface tramée ou matrice de points (12, 14, 16, 18) générée fait varier la puissance projetée par niveaux de gris à l'intérieur d'un masque de projection, de manière que la puissance du rayonnement électromagnétique de pixels de contours soit augmentée par rapport à la puissance du rayonnement électromagnétique de pixels de surface.

4. Dispositif de production d'un objet (3) en trois dimensions par solidification, au moyen d'un éclairage à masque (8), d'un matériau (4) durcissable sous l'effet de rayonnement électromagnétique, le rayonnement nécessaire au durcissement étant focalisé dans un plan image ou plan de construction (7),
le dispositif présentant une unité (1) tramée de production d'image, pour assurer un éclairage sélectif, réalisée sous la forme soit d'une ligne soit d'une matrice,
l'unité (1) de production d'image composant l'image à partir de différents points image ou pixels (13, 15, 17, 19) et formant ainsi un masque tramé ou matrice de points (12, 14, 16, 18),
les pixels (13, 15, 17, 19) étant disposés de manière spatialement fixe les uns par rapport aux autres dans le plan,
le dispositif étant adapté pour générer une surface tramée ou matrice de points (12, 14, 16, 18), dont la résolution corresponde exactement à la résolution des éléments discrets ou pixels dans l'unité (1) de production d'image,
la surface tramée ou matrice de points (12, 14, 16, 18) générée faisant varier, par niveaux de gris à l'intérieur d'un masque de projection, la puissance projetée du rayonnement électromagnétique par pixel (13, 15, 17, 19), **caractérisé en ce que**
le dispositif est adapté pour, dans le cas d'une projection ou superposition d'images à couches, décalées de la valeur de sous-pixels, par superposition de nivaux de gris, en particulier le long des contours de la structure de surface projetée, une distribution à peu près homogène de la puissance du rayonnement électromagnétique ou de l'intensité d'éclairage soit obtenue par le biais de la somme des masques à nivaux de gris.

5. Dispositif selon la revendication 4, **caractérisé en ce que**, au moyen de la surface tramée ou de la matrice de points (12, 14, 16, 18) générée, on peut influer sur la puissance projetée, par niveaux de gris à l'intérieur du masque de projection, de manière à pouvoir influer sélectivement sur le degré de durcissement dans une couche.

6. Dispositif selon l'une des revendications 4 ou 5, adapté pour, au moyen de la surface tramée ou de la matrice de points (12, 14, 16, 18) générée, faire varier la puissance projetée, par niveaux de gris à l'intérieur du masque de projection, de manière que la puissance du rayonnement électromagnétique de pixels de contours soit augmentée par rapport à la puissance du rayonnement électromagnétique de pixels de surface.
